(19)

Europäisches
Patentamt
European
Patent Office
Office européen
des brevets

(11) **EP 4 526 709 B1**

(12) **EUROPEAN PATENT SPECIFICATION**

(45) Date of publication and mention
of the grant of the patent:
**04.03.2026 Bulletin 2026/10**

(21) Application number: **23744217.3**

(22) Date of filing: **26.05.2023**

(51) International Patent Classification (IPC):
***G01T 1/12*** (2006.01)

(52) Cooperative Patent Classification (CPC):
**G01T 1/12**

(86) International application number:
**PCT/GB2023/051402**

(87) International publication number:
**WO 2023/227909 (30.11.2023 Gazette 2023/48)**

(54) **TRANSMISSION CALORIMETER FOR MEASURING DOSE OF RADIATION**

TRANSMISSIONSKALORIMETER ZUR MESSUNG DER STRAHLUNGSDOSIS

CALORIMÈTRE À TRANSMISSION POUR MESURER LA DOSE DE RAYONNEMENT

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **27.05.2022 GB 202207878**

(43) Date of publication of application:
**26.03.2025 Bulletin 2025/13**

(73) Proprietor: **NPL Management Limited
Teddington, Middlesex TW11 0LW (GB)**

(72) Inventors:
• **FLYNN, Samuel Francis
Teddington Middlesex TW11 0LW (GB)**
• **LEE, Nigel David
Teddington Middlesex TW11 0LW (GB)**
• **THOMAS, Russell Adrian Stanton
Teddington Middlesex TW11 0LW (GB)**
• **PALMANS, Hugo
Teddington Middlesex TW11 0LW (GB)**

• **DUANE, Simon
Teddington Middlesex TW11 0LW (GB)**

(74) Representative: **Williams Powell
330 High Holborn
London WC1V 7QH (GB)**

(56) References cited:
**US-A- 4 620 800      US-A- 4 812 663**

• **RENAUD J ET AL: "Development of a graphite
probe calorimeter for absolute clinical
dosimetry: Numerical design optimization,
prototyping and experimental proof-of-concept",
MEDICAL PHYSICS (LANCASTER), 1 July 2012
(2012-07-01), United States, pages 4623 - 4623,
XP093079363, Retrieved from the Internet
<URL:https://escholarship.mcgill.ca/concern/
theses/cc08hk35f> [retrieved on 20230906], DOI:
10.1118/1.4740106**

**Description**

The present invention relates to a transmission calorimeter for measuring the dose (or dose area product or fluence) of a beam of radiation, and in particular to a transmission calorimeter for measuring relatively high dose rate radiation (for example dose rates in excess of 40 Gy/s) to be delivered to a patient during radiotherapy.

Use of radiation for therapeutic treatment of patients (for example in treatment of tumours) is well known and can include the use of beams of protons, electrons or photons. It is important that the radiation beam (no matter what type) is properly quantified in order that an appropriate dose is delivered to the patient, and conventionally this is done by the radiation beam passing through a transmission ionisation chamber prior to the patient to measure the dosage of the radiation delivered. In order that an ionisation chamber can be used in this manner it should first be calibrated, and this is typically carried out using an absorption calorimeter or a secondary standard ionisation chamber traceably calibrated to a primary standard (usually a calorimeter or free air chamber) to measure the dose in a phantom as a substitute of the patient.

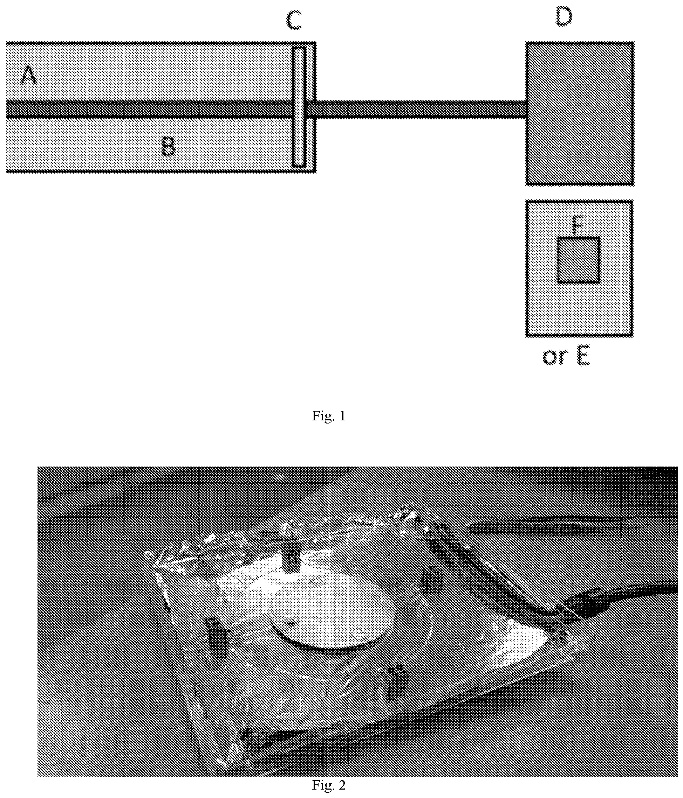

In the known arrangement (shown in Figure 1), a radiation source (A) generates a radiation beam (B) which passes through a transmission ionisation chamber (C) which measures the beam without blocking it and with minimal perturbation. The beam then passes into a conventional calorimeter (D) embedded in a phantom and the temperature of the calorimeter is raised by an amount which is dependent on the dose of the radiation beam. The calorimeter therefore acts as a primary standard reference device and is used to calibrate the transmission ionisation chamber which acts as a beam monitor to quantify the fluence that has passed through it and that is proportional to the dose at the calorimeter measurement point. Once the transmission ionisation chamber has been calibrated it can be used to measure the dose of a radiation beam which is directed to a patient (E) in order to treat a tumour (F). In summary, the signal of the beam monitor ionisation chamber is calibrated in terms of the dose in the phantom.

The problem with using ionisation chambers to measure radiation dose is they are unsuitable for higher rate doses used in (for example) FLASH radiotherapy. FLASH radiotherapy is a radiotherapy modality in which dose rates in excess of 40 Gy/s are used due to their enhanced healthy tissue sparing effects, relative to conventional dose rates (typically of 6 Gy/min). Investigations into the FLASH radiotherapy regime are growing in popularity, with preclinical and clinical trials under active research. Conventional radiation treatment (of 5-10 minutes a day for perhaps 30 days) can be condensed into a single high intensity burst of radiation lasting a fraction of a second.

Performing dosimetry under these conditions is difficult, however, due to the very high dose rates which result in unacceptably high levels of "ion recombination" effects in traditionally designed and operated ionisation chambers. This results in a significant loss in ion collection efficiency, requiring numerous corrections resulting in large uncertainties in the measured dose, and therefore a large uncertainty in the dose delivered to the patient. See for example "Correction for Ion Recombination in a Built-in Monitor Chamber of a Clinical Linear Accelerator at Ultra-High Dose Rates", Konradsson et al., Radiation Research 194(6), 580-586, (22 June 2020) and "Beam Monitors for Tomorrow: The Challenges of Electron and Photon FLASH RT", Vignati et al., Front. Phys. 8:375.

Various solutions have been proposed to address this problem, but all have shortcomings. Transmission ionisation chambers with combined electronics have been developed to operate at FLASH dose rates but it is recognised that this is a compromise and there are shortcomings which again result in higher than desirable uncertainty in the quantification of the dose delivery. Silicon detectors are being developed, but these are very expensive, have a limited lifespan (because the silicon is damaged by ionising radiation over time) and again have limitations in higher dose rates. Finally, luminescence-based detectors could be used, but these have a high level of uncertainty and will also have a saturation threshold.

Historically, there have only ever been two types of calorimeter used in external beam radiotherapy.

- ◦ Absorbed Dose Calorimeters. A small sensitive volume is enclosed in a larger environment 'phantom'. Radiation is delivered to the larger phantom volume (including the sensitive volume). A variation of this is to measure surface dose.

- ◦ Total Absorption Calorimeters. A sensitive volume designed to be larger than the lateral size of the radiation beam, and longer than the range of the particles to be measured. The entire energy of the particles can be inferred from these instruments. It is possible to segment these detectors as a function of depth to provide additional information on the radiation beam.

US 4620800 A (Research Dynamics Inc.) discloses a direct dosimeter for measuring gamma radiation flux having dose rates in excess of 0.1 megarad/hr. The dosimeter includes a gamma heating material such as aluminum or lead positioned in an evacuated housing. A thermocouple measures the temperature of the material when subjected to high levels of gamma radiation. From the time rate of change of the temperature measurements, the absolute value of gamma radiation flux may be determined before the temperature of the material has reached a steady state value.

US 4312224 A (Domen) discloses an absorbed dose water calorimeter that takes advantage of the low thermal diffusivity of water and the water-imperviousness of polyethylene film.

US 4614635 A (GEC) discloses an apparatus and method which, in cooperation with an electrical system, analyses signals generated by detectors placed in a flux field of gamma rays and neutrons.

US 2018/250529 A1 (Sun Nuclear Corporation) discloses graphite probe calorimeters for clinical reference dosimetry which function as secondary standards and allow radiotherapy doses to be measured directly and in an absolute manner.

CN 106125123 A (Northwest Institute Of Nuclear Technology) discloses a calorimeter and a system and method for measuring an absorbed dose. The calorimeter comprises a central ball and a hollow ball which is arranged to be concentric with the central ball. The hollow ball is sequentially provided with an inner case, an insulating layer and an outer case from the inside to the outside. The interior of the central ball is provided with a first thermistor. A second thermistor is disposed between the insulating layer and the outer case. A lead wire of the first thermistor is connected with a wire through a hole.

SU 989963 A1 (Suchkov) discloses a calorimeter for measuring pulsed ionising radiation, comprising thermocouples and a radiation absorber in the form of a set of parallel plates, characterised in that, with the aim of increasing the accuracy of the measurements and simplifying the construction, the thermocouples are made in the form of absorber plates connected in pairs at the centre and insulated at the periphery, made from materials with similar absorption capacity and different absolute thermo-emf.

SU 593554 A1 (Berlyand) discloses a calorimeter for measuring the local power of absorbed dose of electron radiation, comprising an absorber and a measuring unit, characterised in that, in order to extend the measurement range towards low energies, increase the accuracy of measurement and simplify the construction, the absorber is made from radiation-resistant and heat-resistant current-conducting polyimide film and is connected electrically to the measuring unit.

In accordance with a first aspect of the invention, there is provided a transmission calorimeter as a replacement for the traditional transmission ionisation chamber for measuring the dose of a beam of radiation, wherein the calorimeter includes a core for receiving and transmitting said radiation along a radiation path which passes through said core and at least one sensor for measuring the temperature change of the core, wherein the energy of said radiation absorbed by the calorimeter is less than or equal to the energy that would be absorbed by transmitting said radiation through 2 mm of water.

It has surprisingly been discovered that a calorimeter which is constructed in accordance with the present invention can be used to measure the dose of a beam of radiation, and the beam of radiation can then be used to treat a patient because of the radiation transmission properties of the calorimeter. Furthermore, such a calorimeter can be used for the measurement of relatively high doses and dose rates of radiation (for example protons, electrons or photons) without the problems associated with using ionisation chambers. In fact, it has been discovered that any uncertainty in measurement decreases as a function of dose rate, making calorimetry ideal for use in the FLASH modality.

It is important to note that it is the entire calorimeter (in other words the calorimeter core and any other material which lies on or in the radiation path) which must have the energy absorption properties defined above. This is distinct from prior art calorimeters which comprise a core embedded in a phantom environment which perturbs the radiation beam by more than the acceptable amount.

For example, in the case of prior art absorbed dose calorimeters, only a fraction of the particle energy is absorbed in the core or sensor; however, due to their construction with the core embedded in a phantom environment (which is an essential feature of their operation), they inhomogeneously perturb the radiation beam and therefore cannot be used as an in-beam monitor because they would completely destroy the desired construct of dose delivery to the patient. They are also designed as an instrument to measure dose in a phantom which is a substitute for the patient and therefore are positioned in the radiation beam as a surrogate for the patient and then removed prior to patient treatment, whereas the transmission calorimeters of the present invention are continuously positioned in the beam path between the radiation source and the patient.

When measuring the output of the beam delivery system, two distinct dosimetric tasks are required. The first is that of beam delivery which is measured usually using internal ionisation chambers to monitor the amount of radiation being transmitted with minimal perturbation. The second dosimetric task is related to "dose determination in the patient" or for industrial applications, this task is instead "dose determination in the irradiated sample". Within the field of radiotherapy, the present transmission calorimeter has been designed with the former in mind; whilst all other calorimeters to date have been the latter. The calorimeter of the present invention can also perform the second task by calibrating it against an absorbed dose calorimeter. It must be understood that the present calorimeter also measures a dose directly, but it is not the dose in the patient or phantom medium, rather a dose in its own core that is related to the particle fluence in the beam that is being monitored as is made clear in the section below headed "Fluence equations".

The prior art devices acknowledged above are mostly intended for use in a standards laboratory, not in a clinical setting. All the calorimeters in question are placed in the path of a beam after it has passed through a monitor ionisation chamber and are used to calibrate the ionisation chamber as described in the introduction.

They cannot be used to perform the same function as the calorimeter of the present invention for the following reasons:

- The thermosensitive area is located within a phantom environment (i.e. the entirety of the calorimeter) which results in a beam perturbation of greater than 2 mm water equivalent thickness. Accordingly, a significant proportion, if not all of the beam, is attenuated/absorbed, which, in combination with several layers of material that cause significant inhomogeneous scattering of the beam, renders them unsuitable for use as an in-beam monitor
- They are dependent on the beam directly irradiating a specific portion of the thermosensitive area and require the beam to be collimated prior to the measurement point therefore limiting the area of beam passing through them and onto the patient/measurement device located downstream. For these reasons, they must be removed from the beam and replaced with the patient/measurement device
- They measure radiation dose at a point within the beam, rather than an integrated measurement across the entire radiation beam (often referred to as Dose Area Product) as is necessary for an in-beam monitor

The present calorimeter is formed such that it absorbs minimal energy from the radiation beam such that the radiation passes through the calorimeter and exits having sufficient radiation energy to treat a patient (in a similar fashion to that of the existing technology using transmission ionisation chambers). This is also commonly described as minimising the beam perturbation. As noted above, the definition that is used in the present application is that the energy of said radiation absorbed by the calorimeter is less than or equal to the energy that would be absorbed by 2 mm of water (the equivalent 'water depth'). The concept of 'absorbed dose to water' is a well-known measure of radiation energy loss in the field of dosimetry, as described for example in Luoni F, Weber U, Boscolo D, Durante M, Reidel C-A, Schuy C, Zink K and Horst F (2020) Beam Monitor Calibration for Radiobiological Experiments With Scanned High Energy Heavy Ion Beams at FAIR. Front. Phys. 8:568145. doi: 10.3389/fphy.2020.568145.

It will be appreciated that there are a number of factors that influence the beam perturbation effect of calorimeters, principally the identity of the material from which the core and any jackets surrounding it is made (the stopping power of which is approximately proportional to the atomic number of a pure elemental material) and the thickness of the calorimeter components (through which the beam passes). Perturbation of a radiation beam manifests in the form of energy loss of the incident beam due to absorption in a medium, and an increased angular divergence due to scattering in the medium. These two factors are interdependent, so that a material which has a greater stopping power (i.e. a greater perturbation effect) can be used provided it is thin enough, whereas a material with a minimal stopping power can be thicker. These factors can easily be adjusted by the user in order to form a transmission calorimeter which operates according to the definition.

Using lookup tables (such as the PSTAR database from NIST (https://physics.nist.gov/PhysRefData/Star?Text/PSTAR.html)), the energy a proton loses passing through a thin amount of material can be estimated using equation 1:

$$\partial E \sim \rho S(E) \partial x \qquad (1)$$

Where $\rho$ is the density of the material, and $S(E)$ is the mass electronic stopping power (which is a function of energy). Rearranging this, we can estimate the amount of material required to produce an equivalent energy loss for a given amount of water, equation 2:

$$\partial x_{material} = \frac{\rho_{water}}{\rho_{material}} \frac{S(E)_{water}}{S(E)_{material}} \partial x_{water} \qquad (2)$$

Using the value of 2 mm of water attenuation typical of a monitor chamber, it is possible to determine the amount of a material to produce the same amount of attenuation. For proton beam therapy, the energies of 70 MeV and 225 MeV were chosen as an indicative clinical minimum and maximum, as shown below.

| Material Name | Material Density (g/cm3) | Material Stopping Power at 70 MeV (MeV cm2/g) | Material Stopping Power at 225 MeV (MeV cm2/g) | Max material thickness at 70 MeV (mm) | Max material thickness at 225 MeV (mm) |
|---|---|---|---|---|---|
| Aluminium | 2.70 | 7.41 | 3.28 | 0.96 | 0.94 |
| Copper | 8.96 | 6.29 | 2.83 | 0.34 | 0.33 |
| Titanium | 4.50 | 6.69 | 2.98 | 0.64 | 0.62 |
| Silver | 10.49 | 5.60 | 2.55 | 0.33 | 0.31 |
| Gold | 19.30 | 4.65 | 2.16 | 0.21 | 0.20 |

Whilst making the core of the calorimeter of the present invention thinner is certainly possible, it does introduce manufacturing challenges and the possibility of increased sensitivity to thermal noise. Using this analysis, it has been identified that due to its low density and relatively low mass stopping power, aluminium is the ideal material for minimum perturbation.

A similar analysis can be performed for x-ray radiation using the conventional water attenuation equation (3) (https://physics.nist.gov/PhysRefData/XrayMassCoef/Chap2.html):

$$I = I_0 e^{\left(-\frac{\mu}{\rho}x\right)} \qquad (3)$$

Where $\mu$ is the mass attenuation coefficient, and $I$ is a measurement of the intensity of the radiation. Equating the intensity loss for two different media, this can be rearranged as shown in equation 4:

$$\partial x_{material} = \frac{\mu_{water}}{\mu_{material}} \frac{\rho_{material}}{\rho_{water}} \partial x_{water} \qquad (4)$$

Using public data (https://physcs.nist.gov/PhysRefData/XrayMassCoef/ComTab/water.html), (https://physcs.nist.gov/PhysRefData/XrayMassCoef/Tab3.html) for a low energy (100kV) and a high energy (6 MV) beam, the following table can be realised:

| | Density (g/cm3) | Mass Attenuation at 100 kV ($\mu/\rho$) ($cm^2/g$) | Mass Attenuation at 6 MV ($\mu/\rho$) ($cm^2/g$) | Max material thickness (mm) at 100 kV | Max material thickness (mm) at 6 MV |
|---|---|---|---|---|---|
| Aluminium | 2.70 | 0.17 | 0.03 | 0.74 | 0.77 |
| Copper | 8.96 | 0.46 | 0.03 | 0.08 | 0.20 |
| Titanium | 4.50 | 0.27 | 0.03 | 0.28 | 0.43 |

Using this analysis, it can be determined that a transmission calorimeter with an aluminium core of 0.74 mm thickness would be suitable for monitoring low and high energy x-rays, and low and high energy proton beams.

In a preferred embodiment, therefore, the core is formed from aluminium, copper, titanium, silver, gold or from alloys thereof. It may have a thickness in the direction of the radiation path of 1 mm or less, preferably 0.75 mm or less, and most preferably from 0.4 to 0.7 mm.

Preferably, the sensor is a thermistor. Most preferably, the calorimeter has a plurality of sensors (more preferably four sensors), which may be distributed at equal angles about the centre of the core (which is preferably circular).

The core preferably has a diameter in a plane perpendicular to the radiation path of 5 mm or greater. Thus, in use, the beam of radiation is preferably narrower in diameter than the diameter of the calorimeter core, to measure an integration over the radiation field, rather than at a point.

The calorimeter core is preferably uniformly flat, such that any perturbation to the beam is applied uniformly; and with no prominent structure resulting from additional material causing a change in the radiation beam profile.

The transmission calorimeter may additionally include a body which is not located on said radiation path and which is thermally insulated from the calorimeter core, and at least one sensor for measuring a temperature change of said body, whereby in use any temperature change of said body caused by ambient temperature changes can be measured, and the result used to compensate for changes in ambient temperature.

The body preferably has the same surface area as the core, preferably has the same thickness as the core, and is preferably formed of the same material as the core. The body may be configured in the form of a torus, said torus being positioned around said core.

This body or 'compensating core' (as it will be referred to herein) will be exposed to the same environmental conditions as the 'active core'. By comparing the temperature of the active core to the compensating core, changes in the ambient temperature can be isolated, allowing for a more accurate measurement of radiation induced temperature rise.

The transmission calorimeter of the present invention can also be defined in terms of a measurement of "relative fluence" of the incident beam, in addition to dose area product (DAP) or dose. A series of equations linking the temperature increase to the fluence of a radiation beam is set out below:

I. Fluence Equations

For charged particles such as electrons, protons or carbon ions, the dose deposited in a medium ($D_{med}$) is a combination of the particle fluence ($\Phi_{med}$), the density of the medium ($\rho$), and the unrestricted mass collision stopping power of the medium at the energy of the particle ( $\left( S_{col}/\rho \right)_{med}$ ), as related by equation 5:

$$D_{med} = \Phi_{med} \left( S_{col}/\rho \right)_{med} \qquad (5)$$

Dose deposited in the medium induces a temperature change ($\Delta T$) related to the specific heat capacity of the medium ($c_p(T)$), as related by equation 6:

$$D_{med} = c_p \, \Delta T \qquad (6)$$

Combing equation 5 and equation 6 produces a relation between the radiation induced temperature rise within a medium and the particle fluence, as described by equation 7:

$$c_p \, \Delta T = \Phi_{med} \left( S_{col}/\rho \right)_{med} \qquad (7)$$

Acting as a monitor device for radiotherapy treatments, the core of the transmission calorimeter will be consistent, resulting in constant values for $c_p$ , and $\left( S_{col}/\rho \right)_{med}$ . This results in the reduced relationship described in equation 8, where $\alpha$ represents all other constants:

$$\Phi_{med} = \alpha \Delta T \qquad (8)$$

Using equation 8, and measuring the radiation induced temperature rise induced by the radiation beam, the transmission calorimeter can act as a radiation monitor, verifying the linearity of the fluence through the transmission calorimeter core.

A similar relationship exists with therapeutic (or otherwise) photon fluence interactions with the transmission calorimeter core of thickness (x), using the mass attenuation coefficient ( $\mu/\rho$ ), as described in equation 9:

$$\Phi_{med} = \Phi_{med_0} e^{-\left(\mu/\rho\right)(\rho x)} \quad (9)$$

The energy deposited within the transmission calorimeter core, and thus dose, is proportional to the difference in the number of photons between $\Phi_{med}$ and $\Phi_{med0}$. The specific relationship will entirely depend on energy regime, however broadly this is described in equation 10:

$$D_{med} \propto \Phi_{med_0} \left(1 - e^{-\left(\mu/\rho\right)(\rho x)}\right) \quad (10)$$

For a sufficiently thin material, equation 10 reduces further, as described in equation 11:

$$D_{med} \propto \Phi_{med} \quad (11)$$

Relating equation 8 and equation 11, it can again be shown that the radiation induced temperature rise of a thin transmission core is directly proportional to the fluence of photons.

By measuring the radiation induced temperature rise of the present transmission calorimeter, a particle-invariant relationship to fluence can be observed. The calorimeter could thus be used as a monitoring device.

II. Multiple Scattering Equations

An analytical approximation for the angular distribution resulting from passing a proton through a material was developed by Rossi in 1941. This uses the particles momentum "$p$", velocity "$v$", the material thickness "$L$" and a value of the radiation length ($L_R$)" which can be precalculated or determined by chemical composition. This can be used to determine the induced angular spread ($\theta_0$), as shown in equation 12.

$$\theta_0 = \frac{15\,MeV}{pv} \sqrt{\frac{L}{L_R}} \quad (12)$$

A revised version of this equation was developed by Highland in 1975, introducing a dependence on the atomic number of the medium "$Z$", as presented in equation 13:

$$\theta_0 = \frac{14.1\,MeV}{pv} Z \sqrt{\frac{L}{L_R}} \left[1 + \frac{1}{9}\log_{10}\left(\frac{L}{L_R}\right)\right] \quad (13)$$

A much-reduced version of this equation is described in Equation 14.

$$\theta_0 \propto Z \sqrt{L} \quad (14)$$

The transmission calorimeter is designed to be preferably uniformly flat and thin, such that the induced angular spread of the incident beam is minimal and distributed equally with regard to the incident beam. The presence of non-homogeneous zones of differing materials in a beam monitoring instrument would result in complex, non-trivial scattering that is difficult to account for within a beam delivery system.

III. Energy Loss Equation

For charged particles, the Bethe-Bloch formula determines the average energy loss per unit of distance ( $\frac{dE}{dx}$ ) as a function of the electron mass ($m_e$), atomic number ($z$) of the incoming particle, the speed of light ($c$), electron density ($n$), the fractional velocity of the speed of light ($\beta$), vacuum permittivity ($\varepsilon_0$), and mean excitation energy of the media ($I$), equation 15:

$$-\left\langle\frac{dE}{dx}\right\rangle = \frac{4\pi}{m_e c^2}\frac{nz^2}{\beta^2}\left(\frac{e^2}{4\pi\varepsilon_0}\right)^2\left[\ln\left(\frac{2m_e c^2\beta^2}{I(1-\beta^2)}\right)-\beta^2\right] \qquad (15)$$

The intricacies of equation 15 are beyond the scope of this application. Using the relationship linking electron density ($n$) of a material to Avogadro's Number ($N_A$), the atomic number of the material ($Z$), the relative atomic mass of the material ($A$) and the Molar Mass Constant ($M_u$) described in equation 16, it is possible to reduce equation 15 further to that described in equation 17. Equation 17 demonstrates that energy loss is proportional to thickness and atomic number of the absorbing material ($Z$), and density of the material.

$$n = \frac{N_A\,\rho\,Z}{A\,M_u} \qquad (16)$$

$$dE \propto \rho\,Z\,dx \qquad (17)$$

In accordance with a second aspect of the invention, there is provided a method of measuring the dose of a beam of radiation, including the steps of:

(a) providing a beam of radiation,

(b) directing the radiation along a radiation path at a transmission calorimeter as defined above, wherein the radiation passes through and exits the core of said calorimeter and causes the temperature of the core to change, and

(c) measuring said temperature change and using said change to calculate the dose of the radiation.

When a calorimeter is employed having a compensating core, the method of measuring the dose of a beam of radiation, includes the steps of:

(a) providing radiation,

(b) directing the radiation along a radiation path at said transmission calorimeter, wherein the radiation passes through and exits the core of said calorimeter but does not pass through the body and causes the temperature of the core to change, and

(c) measuring the temperature change of the core,

(d) measuring any change in the temperature of the body and using that information to calculate any change in temperature of the core caused by ambient temperature changes;

(e) calculating the dose of the radiation based on the change in temperature of the core caused by said radiation.

In a third aspect of the invention, there is provided apparatus for measuring the intensity of radiation as a function of depth, comprising a plurality of transmission calorimeters as defined above which are arranged in series along said radiation path, and including a material (for example a transparent plastics material) between each calorimeter, wherein the material has an absorption effect on the radiation.

In a fourth aspect of the invention, there is provided apparatus for treating a patient with radiation, including:

(a) an inlet for receiving radiation, an outlet for dispensing radiation and a beam guide for guiding radiation through said apparatus from the inlet to the outlet along a radiation path, and

(b) a transmission calorimeter as defined above which is located between the inlet and the outlet along said radiation path or wherein the calorimeter is located downstream of the outlet.

The apparatus may additionally include a beam bender located upstream of the outlet for bending said radiation around a corner.

The apparatus may additionally include a beam shaper for shaping the radiation before it is dispensed from the outlet.

The transmission calorimeter is preferably located between the beam bender and the beam shaper.

A number of preferred embodiments of the invention will now be described, with reference to and as illustrated in the following drawings:

Figure 1 is a schematic diagram showing a prior art arrangement of an ionisation chamber used to measure radiation dosage;

Figure 2 is a photograph of a prototype transmission calorimeter in accordance with the invention;

Figure 3 is a schematic diagram of an experimental set-up to test a prototype transmission calorimeter in accordance with the invention;

Figure 4 is a graph of temperature against time to show a comparison of calorimeter response for 10 deliveries of radiation;

Figure 5 is a graph of temperature against time to show a comparison of calorimeter response for two irradiation cycles;

Figure 6 is a graph showing a temperature extrapolation of a prototype absorption calorimeter (SSCal);

Figure 7 is a graph showing a temperature extrapolation of a prototype transmission calorimeter in accordance with the invention;

Figure 8 is a graph of temperature response against dose of a prototype transmission calorimeter in accordance with the invention;

Figure 9 is a graph of temperature response against time for a prototype transmission calorimeter and an absorption calorimeter in accordance with the invention when operated at a high doses;

Figure 10 is a graph of the transmission calorimeter temperature response against absorption calorimeter dose from the data presented in Figure 9;

Figure 11 is a graph of temperature response of the transmission calorimeter in accordance with the invention against dose measured by the Secondary Standard calorimeter (SSCal) grouped according to prescribed proton beam current;

Figure 12 is a graph showing the standard deviation of the relative response of the prototype transmission calorimeter in accordance with the invention and an absorption calorimeter against dose;

Figure 13 is a graph showing the temperature response against time for a calorimeter in accordance with the invention and associated pre-drift and post-drift extrapolated curves fitted to the data.

Figure 14 is a schematic diagram showing the geometric arrangement of the Compensated Calorimeter simulation in accordance with the invention;

Figure 15 is a schematic diagram of a Wheatstone bridge circuit for use in the Compensated Calorimeter embodiment in accordance with the invention;

Figure 16 is a graph of the simulated temperature response against time for a radiation induced temperature response of the "Active Core" in accordance with the invention.

Figure 17 is a graph of the simulated temperature response against time for an ambient temperature change without radiation heating;

Figure 18 is a graph of the simulated temperature response against time for a radiation induced temperature change with radiation heating during irradiation of the transmission calorimeter in accordance with the invention;

Figure 19 is a simulated compensated temperature difference plot;

Figure 20 is a plot of temperature against time, showing ten simulated irradiations and environmental fluctuations;

Figure 21 is a plot of simulated temperature difference against time, showing ten simulated irradiations without environmental fluctuations by subtracting the temperature of the "Active Core" from the "Compensator Core" in accordance with the invention;

Figure 22 is a plot of the simulated temperature change of the transmission calorimeter in accordance with the invention with and without the "Compensated Core" for simulated irradiations.

EXPERIMENTAL

Example 1

A prototype transmission calorimeter was developed using domestic aluminium foil with thermistors embedded. The foil was a nominal 50 mm diameter, approximately 0.6 mm thick. The thermistors were networked together in series and parallel such that they had a resistance equal to one thermistor. Due to the low mass of the aluminium it was possible to suspend the aluminium core in air using the thermistor wires. The prototype calorimeter was suspended in a plastic case and was isolated from the external environment using transparent Mylar.

A preliminary investigation at the University of Birmingham's MC40 Cyclotron revealed a good correlation between induced temperature change in Aluminium from a FLASH beam and a Faraday cup. This validated the concept; however due to the limited amount of data, a decision was made to repeat the experiment with several changes.

The second-generation prototype transmission calorimeter was built using a 50 mm diameter 0.5 mm thick Aluminium disk; purchased from Goodfellow. The purity of the core is in excess of 99.9%. A more compact plastic case was used for the calorimeter body, lowering the volume of air inside; and aluminised Mylar was used to isolate the calorimeter from the external environment. Bench tests indicated that this was very effective at isolating the calorimeter core from infrared radiation.

The thermistors were placed 5 mm from the edge of the core and secured in place using thermally conductive glue. Circles of aluminium (0.05 mm thick and 6 mm in diameter) were glued to prevent the thermistors being directly exposed to the air. A photograph of the core with the upper portion of the plastic case removed can be seen in Figure 2.

Although four thermistors were attached, providing mechanical support for the calorimeter, only one was electrically connected. The intention being to partially reduce the complexity, but more significantly, it was found that some of the thermistors were short circuiting themselves through the aluminium core. This is likely a consequence of the construction process of this demonstrator prototype and has not presented an issue in future iterations of the device.

The transmission calorimeter's thermistor was wired to a single unshielded coaxial cable, connected to a DC Wheatstone Bridge. The voltage output of the Wheatstone Bridge was measured using a Keithley DMM6500 multimeter. The transmission calorimeter was calibrated over a range of temperatures using an environmental chamber, referenced against thermocouples traceable to the NPL primary standard for temperature in accordance with the International Temperature Scale of 1990.

The transmission calorimeter was again taken to the MC40 Cyclotron at the University of Birmingham and irradiated with a 36 MeV proton beam, configured to deliver 1 second long irradiations upon pressing a button.

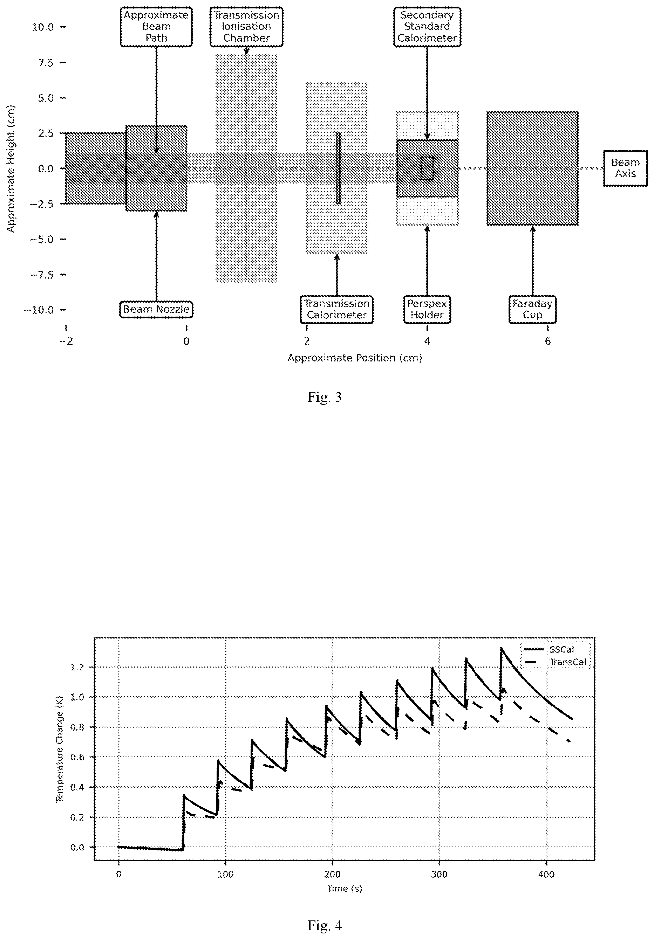

A PTW transmission ionisation chamber (type 34014, 786) was placed at the end of the nozzle to act as an in-beam monitor. This was connected to a USB PC Electrometer (from Sun Nuclear Corporation) to provide relative measurements for the beam. The transmission calorimeter was positioned immediately downstream of the PTW ionisation chamber and connected to the Wheatstone bridge, and Keithley DMM. The set-up is shown in Figure 3.

Further downstream from the transmission calorimeter, a prototype Secondary Standard graphite calorimeter was placed. This device was also calibrated in an environmental chamber, similar to the transmission calorimeter. The Secondary Standard Calorimeter was used to measure the dose delivered by the radiation beam and has a 16 mm diameter and a 2 mm thick core made of graphite, surrounded by a jacket made from 3D printed plastic. The Secondary Standard Calorimeter was connected to a DC Wheatstone bridge with an excitation voltage of 5 V, the output of which was monitored by a Raspberry Pi using an analogue-to-digital convertor (ADC) hardware attachment.

Lastly, a Faraday Cup was positioned further downstream than the Secondary Standard Calorimeter and connected to a Sun Nuclear PC Electrometer. It was predicted the Bragg peak of the 36 MeV proton beam would fall within the depth of the Secondary Standard Calorimeter, and as such, little signal was expected to be recorded in the Faraday Cup.

Due to a failure of the Cyclotron on the day of the measurement, it was not possible to provide a uniform 50 mm diameter beam at high intensity as planned. Instead, the beam delivered was approximately 10 mm in diameter. This was not ideal, as it meant the transmission calorimeter core (50 mm diameter) was larger than necessary thus reducing the magnitude of the measured signal due to the absorbed radiation beam).

An attempt was made to use a transmission ionisation chamber for relative measurements.

RESULTS

Due to the high beam current, it was impossible to use the transmission ionisation chamber for relative measurements because the instantaneous beam current was greater than the largest measurement range setting available on the USB electrometer.

A comparison of ten measurements between the Secondary Standard Calorimeter (SSCal) and transmission calorimeter (TransCal) can be seen in Figure 4 delivering a dose of approximately 250 Gy/s in the Secondary Standard Calorimeter core. As there is a small amount of direct heating of the thermistors in the Secondary Standard Calorimeter, a slight over response can be observed. This is due to the higher relative stopping power of the materials within the thermistors relative to the Secondary Standard Calorimeter core they are embedded within, causing more energy to be absorbed locally.

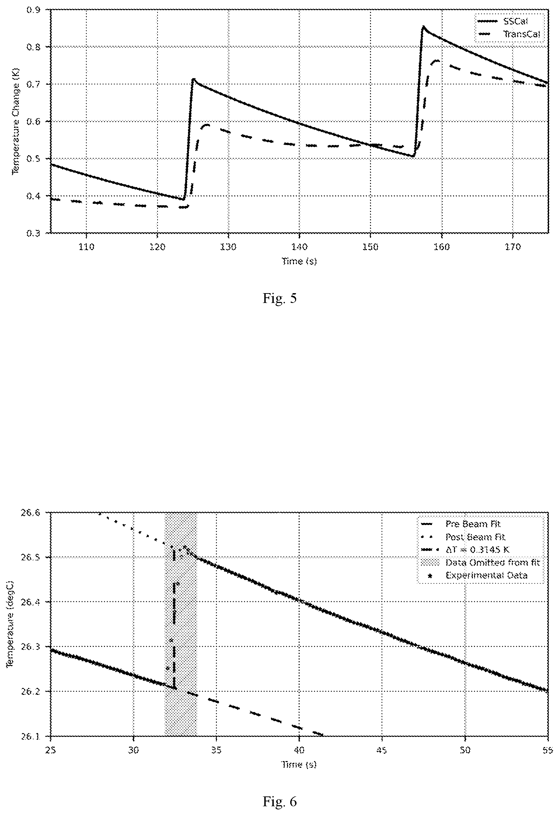

A closer comparison of two irradiations can be seen in Figure 5. As the radiation beam does not directly irradiate the thermistors in the transmission calorimeter, the induced temperature response from the radiation beam takes several seconds to peak; despite the beam delivery only lasting one second. Additionally due to this effect, the timing between the two calorimeter responses appears offset.

The impact of the lack of full environmental shielding can be observed in the transmission calorimeter between 130 and 150 seconds, where there is a change in voltage which is attributed to a small fluctuation in the ambient temperature.

For both the Secondary Standard Calorimeter and transmission calorimeter, the radiation induced change in voltage/temperature was calculated by using a bespoke analysis script written in Python which extrapolates between the beam on/off positions (see Figure 6). For the Secondary Standard Calorimeter, due to the isolation from the environment this is relatively trivial to calculate the radiation induced temperature. The pre-beam temperature drift and post-beam temperature drift are extrapolated to the beam mid-point. As the thermistors in the Secondary Standard Calorimeter are directly in the beam, there is a temporary overresponse in measured temperature as the thermistors are temporarily hotter than the graphite. This is due to the difference in specific heat capacity, density, and relative stopping power of the materials.

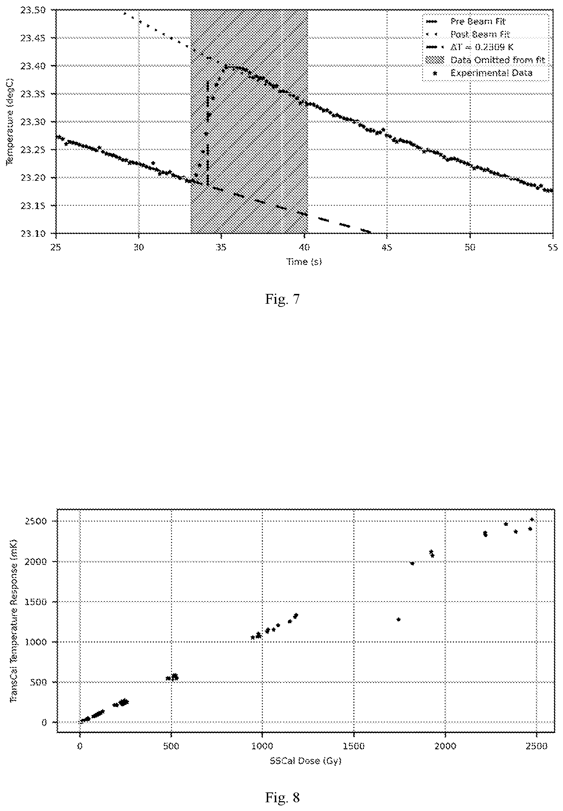

Extrapolating is significantly more challenging for the transmission calorimeter. As the beam was significantly smaller than the calorimeter core, the locally deposited thermal energy must transfer through the core before it can be measured. This results in a systematic delay not present in the Secondary Standard Calorimeter. This can be seen in Figure 7 where the post-beam fit for extrapolation requires some data to be excluded from the analysis.

Linearity study

To investigate the linearity of the transmission calorimeter, the beam current of the cyclotron was varied. The time for each beam delivery was kept at one second, with a consistent energy of 36 MeV. Due to the prior issue with the cyclotron, the size, shape, and position of the beam were not able to be monitored throughout the measurement.

A comparison of all measurement data can be seen in Figure 8. There is observed to be a good linearity between the two instruments, with the exception of the highest dose rate measurements.

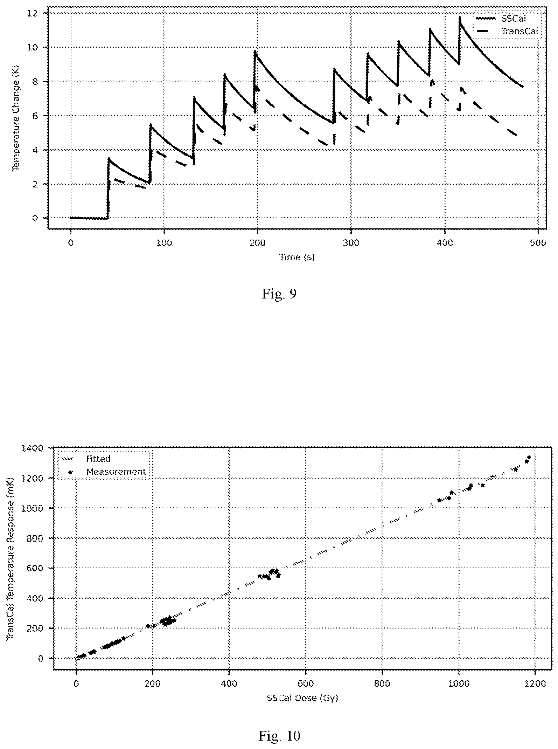

Further investigation of the highest dose rate measurements (Figure 9) reveals that the observed over response of the Secondary Standard Calorimeter due to local thermistor heating appears to vary throughout the series of measurements. This implies that the beam changes shape and/or position.

As this was the first set of measurements after the cyclotron had recovered from the prior fault, it is therefore likely that it was still in the process of settling. Data omitting this run is presented in Figure 10.

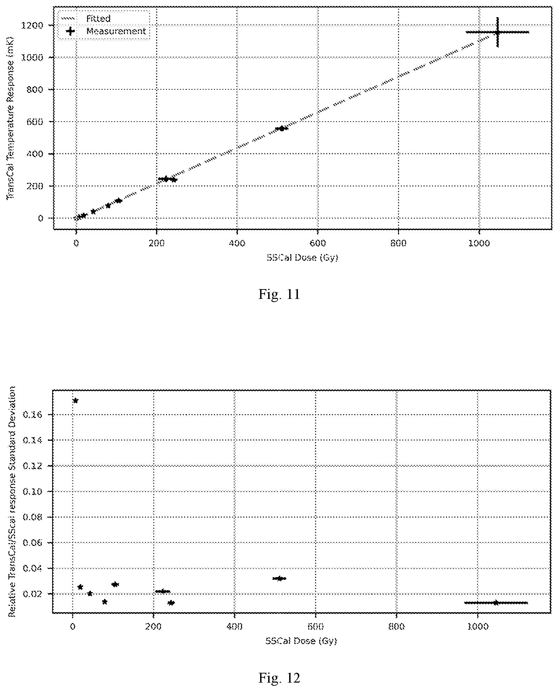

Alternatively, Figure 11 presents data grouped by proton current. There is still a large variation in the readings of the (now) greatest beam current, attributed to the cyclotron still settling. However, this variation is linear with respect to the rest of the measurements - indicating that it is a variation of the beam current and not necessarily the beam shape/size/position.

Uncertainty Study

Explicitly studying the standard deviation of the ratio between the two instruments produces Figure 12. Whilst it is not possible to draw any substantiated conclusions from this about the minimum dose rate the transmission calorimeter can quantify, it is important to note that this behaviour follows the expected response between dose rate and measured output signal of the transmission calorimeter. A higher dose rate measurement is observed to have a lower standard deviation than a lower dose rate measurement. It is anticipated that there exists a dose and dose/rate threshold at which variations in ambient temperature have minimal impact on the calculated dose and resulting value of measurement uncertainty.

Example 2

At the Oncoray research facility, Dresden, measurements were conducted using a revised version of the transmission calorimeter of the present invention (0.4 mm thickness, 78 mm diameter core) for evaluating its use as a monitoring device in conjunction with clinical quality assurance devices.

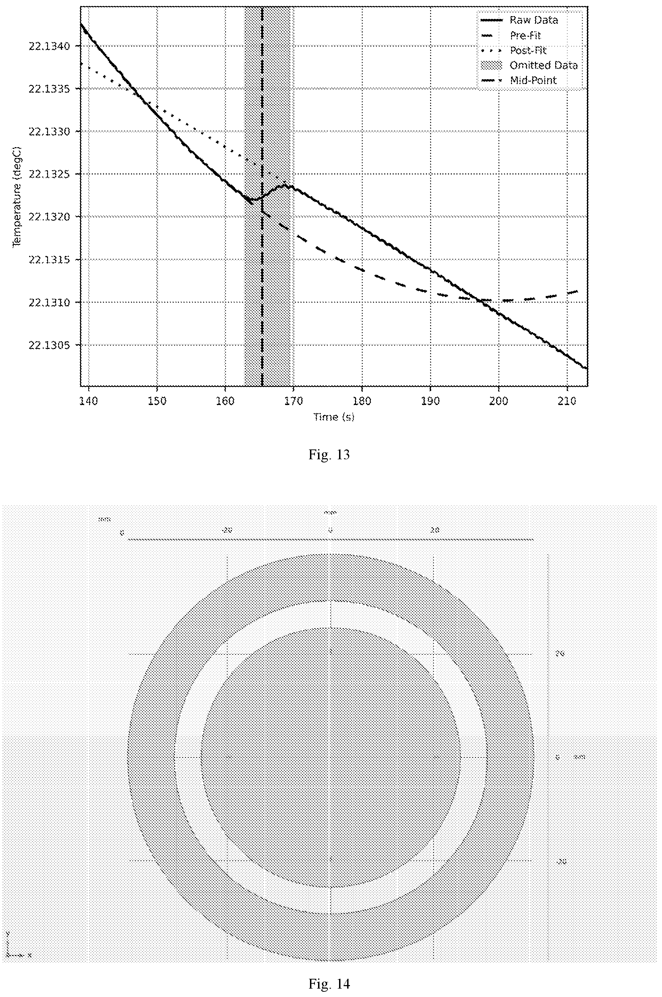

The series of instruments were irradiated with a 180 MeV proton beam, with a full width at half maximum (FWHM) 0.98 x 0.93 mm$^2$. As the proton beam passes through all instruments (depositing energy as it does so), the relative response of the instruments can be correlated. At this energy, the water equivalent thickness of the transmission calorimeter core is approximately 1 mm. An example of a temperature response during a 165 Gy/s delivered in a 200 ms irradiation can be seen in Figure 13.

Compared to the MC40 cyclotron measurement, there are several significant differences. For a comparable sized transmission calorimeter core, the beam at Oncoray is significantly smaller in size. This results in less total energy deposited in the core, and correspondingly a lower radiation induced temperature rise is observed. This highlights the importance of matching the size of the core to the size of the radiation beam, as an unnecessarily large core will have a poor signal to noise ratio (SNR).

Another key difference would be the larger variation in ambient temperature observed without any radiation. As the ambient temperature change should ideally be separated from the radiation induced temperature change for a measurement, this also results in a lower SNR.

Together these differences resulted in a standard deviation of the mean (SDOM) of approximately 10% for this series of measurements. This is significantly higher than prior measurements.

Compensating Core

An example of a transmission calorimeter having a compensating core is described below.

1. Modelling Parameters

a. Simulation Software

Simulations of the heat flow within the Compensated transmission calorimeter were performed using COMSOL Multiphysics 6.0 (Build: 318), using the "Heat Transfer" package. This software performs Finite-Element Modelling (FEM) of temperature flow for many industrial and scientific applications (including calorimetry).

b. Geometry

In its simplest iteration, the Compensated transmission calorimeter was modelled with an inner "Active Core" with radius 2.50 cm. The "Compensator Core" was a ring with an outer radius of 3.92 cm and an inner radius of 3.02 cm. Realised in this manner, both cores had the same surface area, and should both be subject to the same changes in the environment. Both cores had the same thickness of 0.4 mm. Figure 14 presents the geometric arrangement of the Compensated transmission calorimeter.

c. Material Assignment

Both cores were assigned to be made of Aluminium (density 2.70 g/cm3, specific heat capacity 900 J/kgK), using the default library in COMSOL for all other parameters.

d. Radiation Heating

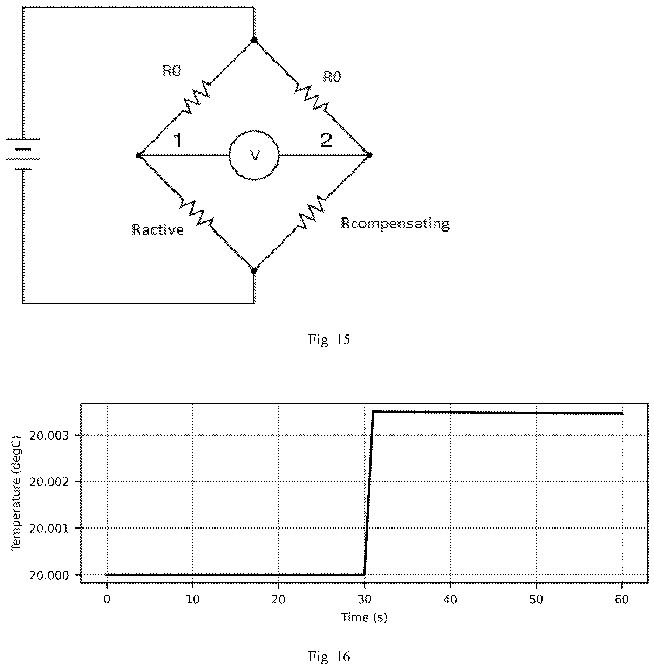

A beam of radiation was simulated by heating the "Active Core" with a Gaussian heat source. This was positioned in the centre of the "Active Core", with a FWHM of 1 cm. This localised heating was configured to last for 1 second. The intensity of the heating was tuned such that the average temperature in the "Active Core" would increase by 3.5 mK, representative of experimental results. The effect of this heating can be seen in Figure 16.

e. Environmental Influence

To simulate the effect of a changing ambient environment, a global heat source was added to all components.

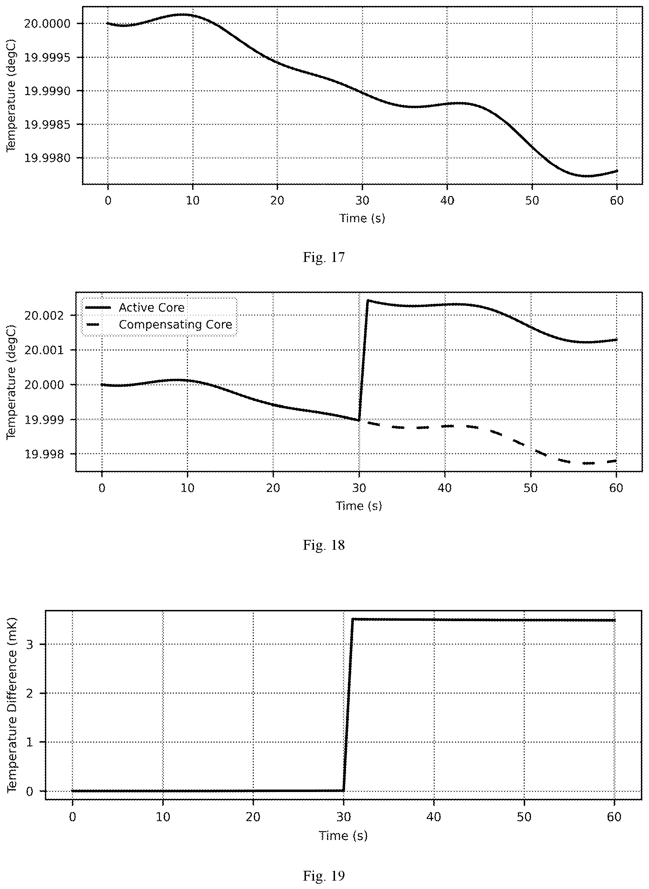

This composed of two sinusoidal waves (with periods of 10.0 and 6.5 seconds) to represent small thermal fluctuations, with a negative heat source added to represent thermal drift. This change in ambient temperature can be seen in Figure 17.

As the radiation induced heating is localised to the "Active Core", the variation in temperature response of the two cores can be seen. This is shown in Figure 18.

f. Temperature Compensation

By subtracting the temperature response of the "Compensating Core" from the "Active Core", the influence of environmental effects can be removed. This may be performed electronically using opposite arms of a DC Wheatstone Bridge circuit such as is shown in Figure 15. For the COMSOL model however, this is simulated data so it is performed analytically, as shown in Figure 19.

g. Simulation Repeats

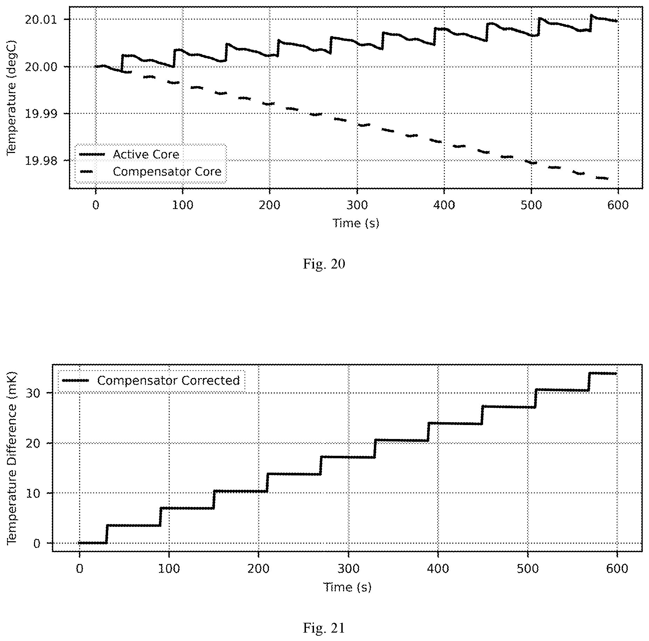

The model was configured to repeat ten simulated irradiations every 60 seconds, using the output of the proceeding model as the input to the next. This is shown in Figure 20.

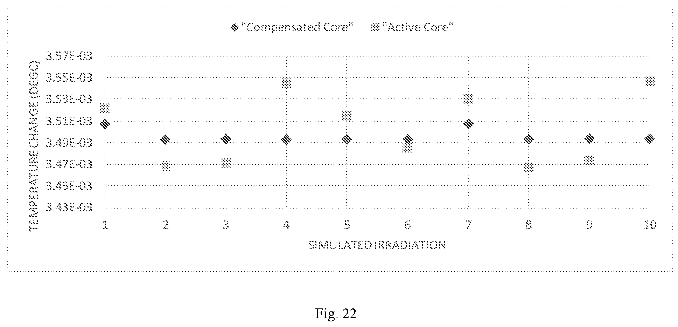

For completeness, the temperature difference between the "Active Core" and the "Compensator" can be shown in Figure 21. A plot of temperature change of the simulated transmission calorimeter with and without the "Compensated Core" for simulated irradiations is shown in Figure 22.

Due to the sinusoidal ambient conditions (discussed previously), each irradiation would have slightly different instantaneous heat flow. The ten readings for temperature change could be compared for statistical analysis.

2. Analysis

a. Analysis Software

Analysis was performed using the National Physical Laboratory (NPL) software "Python Calorimetry Software Analysis v0.3". This software package is used to analyse radiation induced temperature changes of the transmission calorimeter and NPL Secondary Standard Calorimeter (10.1259/bjr.20220638). This software is used for calorimetry analysis both internally to NPL and by scientific collaborators.

b. Analysis results

The temperature data from the "Active Core" and the "Compensated Core" designs were independently analysed by another member of NPL staff who was not provided details about the beam parameters (duration, cycle).

For the 10 simulations, the "Active Core" observed an average temperature rise of 3.502 mK with a standard deviation of 0.93%. For the device with the "Compensated Core", the average temperature rise was found to be 3.496 mK with a standard deviation of 0.17%. The two methods of deriving the temperature rise in the transmission calorimeter Core agree, however the introduction of the "Compensated Core" significantly increases accuracy and reduces the uncertainty in the measurement.

Summary

In this short exercise it has been demonstrated how the introduction of an additional temperature sensitive core to the transmission calorimeter, that is sensitive to only the ambient temperature and not the radiation treatment beam, could be used to improve the accuracy whilst reducing the uncertainty of the measurement. In a medical setting, increased accuracy and reduction of uncertainty in measurement is desirable, with the expectation of an improvement in a patient's treatment outcome.

Although not investigated here, it is anticipated that this reduction in the uncertainty would reduce the minimum dose rate capable of being measured by the transmission calorimeter.

All optional and preferred features and modifications of the described embodiments and dependent claims are usable in all aspects of the invention taught herein. Furthermore, the individual features of the dependent claims, as well as all optional and preferred features and modifications of the described embodiments are combinable and interchangeable with one another.

**Claims**

1. A transmission calorimeter for measuring the dose of a beam of radiation, wherein the calorimeter includes a core for receiving and transmitting said radiation along a radiation path which passes through said core and at least one sensor for measuring the temperature change of the core, wherein the energy of said radiation absorbed by the calorimeter is less than or equal to the energy that would be absorbed by transmitting said radiation through 2 mm of water.

2. A transmission calorimeter as claimed in claim 1, wherein the core is formed from aluminium, copper, titanium, silver, gold or from alloys thereof.

3. A transmission calorimeter as claimed in any preceding claim, wherein the core has a thickness in the direction of the radiation path of 1 mm or less.

4. A transmission calorimeter as claimed in any preceding claim, wherein the core has a diameter in a plane perpendicular to the radiation path of 5 mm or greater.

5. A transmission calorimeter as claimed in any preceding claim which has four sensors which are distributed at equal angles about the centre of the core.

6. A transmission calorimeter as claimed in any preceding claim, additionally including a housing, wherein the core is contained in the housing and wherein the housing is substantially transparent to said radiation along said radiation path.

7. A transmission calorimeter as claimed in any preceding claim, additionally including a body which is not located on or in said radiation path and which is thermally insulated from the calorimeter core, and at least one sensor for measuring a temperature change of the body, whereby in use any temperature change of said body caused by ambient temperature changes can be measured, and the result used to compensate for changes in ambient temperature.

8. A transmission calorimeter as claimed in claim 7, wherein the body has the same surface area as the core.

9. A transmission calorimeter as claimed in claim 7 or 8, wherein the body is configured in the form of a torus, said torus being positioned around said core.

10. Apparatus for measuring the intensity of radiation as a function of depth, comprising a plurality of transmission calorimeters as claimed in any preceding claim arranged in series along said radiation path and including a material between each calorimeter, wherein the material has an absorption effect on the radiation.

11. Apparatus for treating a patient with radiation, including

    (a) an inlet for receiving radiation, an outlet for dispensing radiation and a beam guide for guiding radiation through said apparatus from the inlet to the outlet along a radiation path, and
    (b) a transmission calorimeter as claimed in any of claims 1 to 9 which is located between the inlet and the outlet along said radiation path or wherein the calorimeter is located downstream of the outlet.

12. Apparatus as claimed in claim 11, additionally including a beam bender located upstream of the outlet for bending said radiation around a corner.

13. Apparatus as claimed in claim 12, additionally including a beam shaper for shaping the radiation before it is dispensed from the outlet.

14. Apparatus as claimed in claim 13, wherein the calorimeter is located between the beam bender and the beam shaper.

15. A method of measuring the dose of a beam of radiation, including the steps of:

    (a) providing radiation,
    (b) directing the radiation along a radiation path at a transmission calorimeter as claimed in any of claims 1 to 9, wherein the radiation passes through and exits the core of said calorimeter and causes the temperature of the core to change, and

(c) measuring said temperature change and using said change to calculate the dose of the radiation.

16. A method of measuring the dose of a beam of radiation, including the steps of:

(a) providing radiation,
(b) directing the radiation along a radiation path at a transmission calorimeter as claimed in any of claims 7 to 9, wherein the radiation passes through and exits the core of said calorimeter but does not pass through the body and causes the temperature of the core to change, and
(c) measuring the temperature change of the core,
(d) measuring any change in the temperature of the body and using that information to calculate any change in temperature of the core caused by ambient temperature changes;
(e) calculating the dose of the radiation based on the change in temperature of the core caused by said radiation.

17. A method as claimed in claim 15 or 16 in which the radiation is provided in the form of a beam, and wherein the diameter of the beam is less than the diameter of the calorimeter core.


**Patentansprüche**

1. Transmissionskalorimeter zum Messen der Dosis eines Strahlungsbündels, wobei das Kalorimeter einen Kern zum Empfangen und Übertragen der Strahlung entlang eines Strahlungswegs, der durch den Kern verläuft, und mindestens einen Sensor zum Messen der Temperaturänderung des Kerns umfasst, wobei die vom Kalorimeter absorbierte Energie der Strahlung kleiner oder gleich der Energie ist, die durch Übertragen der Strahlung durch 2 mm Wasser absorbiert würde.

2. Transmissionskalorimeter nach Anspruch 1, wobei der Kern aus Aluminium, Kupfer, Titan, Silber, Gold oder Legierungen davon gebildet ist.

3. Transmissionskalorimeter nach einem der vorstehenden Ansprüche, wobei der Kern in Richtung des Strahlungswegs eine Dicke von 1 mm oder weniger aufweist.

4. Transmissionskalorimeter nach einem der vorstehenden Ansprüche, wobei der Kern einen Durchmesser in einer Ebene senkrecht zum Strahlungsweg von 5 mm oder mehr aufweist.

5. Transmissionskalorimeter nach einem der vorstehenden Ansprüche, das vier Sensoren aufweist, die in gleichen Winkeln um den Mittelpunkt des Kerns verteilt sind.

6. Ein Transmissionskalorimeter gemäß einem der vorstehenden Ansprüche, das zusätzlich ein Gehäuse umfasst, wobei der Kern in dem Gehäuse enthalten ist und wobei das Gehäuse für die Strahlung entlang des Strahlungswegs im Wesentlichen transparent ist.

7. Ein Transmissionskalorimeter nach einem der vorstehenden Ansprüche, das zusätzlich einen Körper umfasst, der sich nicht auf oder in dem Strahlungsweg befindet und der thermisch vom Kalorimeterkern isoliert ist, sowie mindestens einen Sensor zum Messen einer Temperaturänderung des Körpers, wodurch im Betrieb jede durch Umgebungstemperaturänderungen verursachte Temperaturänderung des Körpers gemessen und das Ergebnis zum Ausgleich von Umgebungstemperaturänderungen verwendet wird.

8. Transmissionskalorimeter nach Anspruch 7, wobei der Körper die gleiche Oberfläche wie der Kern aufweist.

9. Transmissionskalorimeter nach Anspruch 7 oder 8, wobei der Körper in Form eines Torus ausgebildet ist, wobei der Torus um den Kern herum angeordnet ist.

10. Vorrichtung zum Messen der Intensität von Strahlung als Funktion der Tiefe, umfassend eine Vielzahl von Transmissionskalorimetern gemäß einem der vorstehenden Ansprüche, die in Reihe entlang des Strahlungswegs angeordnet sind und zwischen jedem Kalorimeter ein Material enthalten, wobei das Material eine Absorptionswirkung auf die Strahlung hat.

11. Vorrichtung zur Behandlung eines Patienten mit Strahlung, umfassend

(a) einen Einlass zum Empfangen von Strahlung, einen Auslass zum Abgeben von Strahlung und eine Strahlführung zum Leiten von Strahlung durch die Vorrichtung vom Einlass zum Auslass entlang eines Strahlungswegs, und

(b) ein Transmissionskalorimeter gemäß einem der Ansprüche 1 bis 9, das sich zwischen dem Einlass und dem Auslass entlang des Strahlungswegs befindet oder wobei sich das Kalorimeter stromabwärts vom Auslass befindet.

12. Vorrichtung nach Anspruch 11, die zusätzlich einen Strahlablenker umfasst, der stromaufwärts vom Auslass angeordnet ist, um die Strahlung um eine Ecke abzulenken.

13. Vorrichtung nach Anspruch 12, die zusätzlich einen Strahlformer umfasst, um die Strahlung zu formen, bevor sie aus dem Auslass abgegeben wird.

14. Vorrichtung nach Anspruch 13, wobei sich das Kalorimeter zwischen dem Strahlablenker und dem Strahlformer befindet.

15. Verfahren zum Messen der Dosis eines Strahlungsstrahls, mit den folgenden Schritten:

(a) Bereitstellen von Strahlung,

(b) Leiten der Strahlung entlang eines Strahlungswegs zu einem Transmissionskalorimeter gemäß einem der Ansprüche 1 bis 9, wobei die Strahlung den Kern des Kalorimeters durchläuft und aus diesem austritt und eine Änderung der Temperatur des Kerns bewirkt, und

(c) Messen der Temperaturänderung und Verwenden der Änderung zum Berechnen der Dosis der Strahlung.

16. Verfahren zum Messen der Dosis eines Strahlungsbündels, einschließlich der folgenden Schritte:

(a) Bereitstellen von Strahlung,

(b) die Strahlung entlang eines Strahlungswegs in einem Transmissionskalorimeter gemäß einem der Ansprüche 7 bis 9 lenken, wobei die Strahlung den Kern des Kalorimeters durchdringt und aus diesem austritt, jedoch nicht den Körper durchdringt und eine Temperaturänderung des Kerns bewirkt, und

(c) Messen der Temperaturänderung des Kerns,

(d) Messen jeder Änderung der Temperatur des Körpers und Verwenden dieser Informationen, um jede durch Änderungen der Umgebungstemperatur verursachte Änderung der Temperatur des Kerns zu berechnen;

(e) Berechnung der Strahlungsdosis auf der Grundlage der durch die Strahlung verursachten Temperaturänderung des Kerns.

17. Verfahren nach Anspruch 15 oder 16, bei dem die Strahlung in Form eines Strahls bereitgestellt wird und wobei der Durchmesser des Strahls kleiner ist als der Durchmesser des Kerns des Kalorimeters.

**Revendications**

1. - Calorimètre à transmission pour mesurer la dose d'un faisceau de rayonnement, le calorimètre comprenant un noyau pour recevoir et transmettre ledit rayonnement le long d'un trajet de rayonnement qui passe à travers ledit noyau et au moins un capteur pour mesurer le changement de température du noyau, l'énergie dudit rayonnement absorbée par le calorimètre étant inférieure ou égale à l'énergie qui serait absorbée par transmission dudit rayonnement à travers 2 mm d'eau.

2. - Calorimètre à transmission selon la revendication 1, dans lequel le noyau est formé d'aluminium, de cuivre, de titane, d'argent, d'or ou de leurs alliages.

3. - Calorimètre à transmission selon l'une quelconque des revendications précédentes, dans lequel le noyau a une épaisseur dans la direction du trajet de rayonnement inférieure ou égale à 1 mm.

4. - Calorimètre à transmission selon l'une quelconque des revendications précédentes, dans lequel le noyau a un diamètre dans un plan perpendiculaire au trajet de rayonnement de 5 mm ou plus.

5. - Calorimètre à transmission selon l'une quelconque des revendications précédentes, qui a quatre capteurs qui sont répartis à angles égaux autour du centre du noyau.

6. - Calorimètre à transmission selon l'une quelconque des revendications précédentes, comprenant en outre un boîtier, le noyau étant contenu dans le boîtier et le boîtier étant sensiblement transparent audit rayonnement le long dudit trajet de rayonnement.

7. - Calorimètre à transmission selon l'une quelconque des revendications précédentes, comprenant en outre un corps qui n'est pas situé sur ou dans ledit trajet de rayonnement et qui est thermiquement isolé du noyau de calorimètre, et au moins un capteur pour mesurer un changement de température du corps, ce par quoi, lors de l'utilisation, tout changement de température dudit corps provoqué par des changements de température ambiante peut être mesuré, et le résultat étant utilisé pour compenser des changements de température ambiante.

8. - Calorimètre à transmission selon la revendication 7, dans lequel le corps a la même aire de surface que le noyau.

9. - Calorimètre à transmission selon la revendication 7 ou 8, dans lequel le corps est configuré sous la forme d'un tore, ledit tore étant positionné autour dudit noyau.

10. - Appareil de mesure de l'intensité de rayonnement en fonction de la profondeur, comprenant une pluralité de calorimètres à transmission selon l'une quelconque des revendications précédentes disposés en série le long dudit trajet de rayonnement et comprenant un matériau entre chaque calorimètre, le matériau ayant un effet d'absorption sur le rayonnement.

11. - Appareil pour le traitement d'un patient par rayonnement, comprenant

(a) une entrée pour recevoir un rayonnement, une sortie pour distribuer un rayonnement et un guide de faisceau pour guider un rayonnement à travers ledit appareil, de l'entrée à la sortie, le long d'un trajet de rayonnement ; et
(b) un calorimètre à transmission selon l'une quelconque des revendications 1 à 9, qui est situé entre l'entrée et la sortie le long dudit trajet de rayonnement ou le calorimètre étant situé en aval de la sortie.

12. - Appareil selon la revendication 11, comprenant en outre un déflecteur de faisceau situé en amont de la sortie pour courber ledit rayonnement autour d'un coin.

13. - Appareil selon la revendication 12, comprenant en outre un conformateur de faisceau pour mettre en forme le rayonnement avant qu'il ne soit distribué à partir de la sortie.

14. - Appareil selon la revendication 13, dans lequel le calorimètre est situé entre le déflecteur de faisceau et le conformateur de faisceau.

15. - Procédé de mesure de la dose d'un faisceau de rayonnement, comprenant les étapes consistant à :

(a) fournir un rayonnement ;
(b) diriger le rayonnement le long d'un trajet de rayonnement sur un calorimètre à transmission selon l'une quelconque des revendications 1 à 9, le rayonnement passant à travers le noyau dudit calorimètre et sortant de celui-ci, et provoquant un changement de la température du noyau ; et
(c) mesurer ledit changement de température et utiliser ledit changement pour calculer la dose du rayonnement.

16. - Procédé de mesure de la dose d'un faisceau de rayonnement, comprenant les étapes consistant à :

(a) fournir un rayonnement ;
(b) diriger le rayonnement le long d'un trajet de rayonnement sur un calorimètre à transmission selon l'une quelconque des revendications 7 à 9, le rayonnement passant à travers le noyau dudit calorimètre et sortant de celui-ci, mais ne passant pas à travers le corps et provoquant un changement de la température du noyau ; et
(c) mesurer le changement de température du noyau ;
(d) mesurer tout changement de la température du corps et utiliser cette information pour calculer tout changement de température du noyau provoqué par des changements de température ambiante ;
(e) calculer la dose du rayonnement sur la base du changement de température du noyau provoqué par ledit rayonnement.

17. - Procédé selon la revendication 15 ou 16, dans lequel le rayonnement est fourni sous la forme d'un faisceau, et dans lequel le diamètre du faisceau est inférieur au diamètre du noyau de calorimètre.

Fig. 1

Fig. 2

Fig. 3

Fig. 4

Fig. 5

Fig. 6

Fig. 7

Fig. 8

Fig. 9

Fig. 10

Fig. 11

Fig. 12

Fig. 13

Fig. 14

Fig. 15

Fig. 16

Fig. 17

Fig. 18

Fig. 19

Fig. 20

Fig. 21

Fig. 22

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4620800 A
- US 4312224 A
- US 4614635 A
- US 2018250529 A1
- CN 106125123 A
- SU 989963 A1
- SU 593554 A1

**Non-patent literature cited in the description**

- **KONRADSSON et al.** Correction for Ion Recombination in a Built-in Monitor Chamber of a Clinical Linear Accelerator at Ultra-High Dose Rates. *Radiation Research*, 22 June 2020, vol. 194 (6), 580-586
- **VIGNATI et al.** Beam Monitors for Tomorrow: The Challenges of Electron and Photon FLASH RT. *Front. Phys*, vol. 8, 375
- **LUONI F ; WEBER U ; BOSCOLO D ; DURANTE M ; REIDEL C-A ; SCHUY C ; ZINK K ; HORST F**. Beam Monitor Calibration for Radiobiological Experiments With Scanned High Energy Heavy Ion Beams at FAIR. *Front. Phys*, 2020, vol. 8, 568145